(19) Europäisches Patentamt / European Patent Office / Office européen des brevets

(11) **EP 4 251 392 B1**

(12) **EUROPEAN PATENT SPECIFICATION**

(45) Date of publication and mention
of the grant of the patent:
**01.01.2025 Bulletin 2025/01**

(21) Application number: **21816442.4**

(22) Date of filing: **24.11.2021**

(51) International Patent Classification (IPC):
**B29B 17/02** (2006.01)    **C08J 11/02** (2006.01)
**C08J 11/06** (2006.01)

(52) Cooperative Patent Classification (CPC):
**C08J 7/02; B29B 17/02; C08J 11/02; C08J 11/06;**
B29B 17/0412; B29B 2017/0289; B29C 71/009;
B29K 2023/00; C08J 2323/02; C08J 2323/10;
Y02W 30/62

(86) International application number:
**PCT/EP2021/082760**

(87) International publication number:
**WO 2022/112290 (02.06.2022 Gazette 2022/22)**

(54) **REMOVAL OF ODORANTS FROM POST-CONSUMER POLYOLEFIN WASTE**

ENTFERNUNG VON DUFTSTOFFEN AUS ALTPOLYOLEFINABFÄLLEN

ÉLIMINATION DE SUBSTANCES ODORANTES CONTENUES DANS DES DÉCHETS DE
POLYOLÉFINES POST-CONSOMMATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2020 EP 20209850**

(43) Date of publication of application:
**04.10.2023 Bulletin 2023/40**

(73) Proprietor: **Borealis AG
1020 Vienna (AT)**

(72) Inventors:
• **DENIFL, Peter
4021 Linz (AT)**
• **PIETTRE, Kilian
4021 Linz (AT)**
• **PAN, Cheng
4021 Linz (AT)**

(74) Representative: **Maiwald GmbH
Elisenhof
Elisenstraße 3
80335 München (DE)**

(56) References cited:
EP-A1- 2 072 203     EP-A1- 2 072 203
EP-A1- 3 210 733     EP-A1- 3 210 733
WO-A1-2017/036977     WO-A1-2017/036977
US-A1- 2015 353 703     US-A1- 2015 353 703

## Description

The present invention relates to a process for treating a recycled polyolefin with an emulsion comprising aqueous and organic phases, as well as the use of said process and/or emulsion for the at least partial removal of volatile organic compounds.

## Background to the Invention

During the last decade, concern about plastics and the environmental sustainability of their use in current quantities has grown. This has led to new legislation on disposal, collection and recycling of polyolefins. There have additionally been efforts in a number of countries to increase the percentage of plastic materials being recycled instead of being sent to landfill.

In Europe, plastic waste accounts for approximately 27 million tons of waste a year; of this amount in 2016, 7.4 million tons were disposed of in landfill, 11.27 million tons were burnt (in order to produce energy) and around 8.5 million tons were recycled. Polypropylene based materials are a particular problem as these materials are extensively used in packaging. Taking into account the huge amount of waste collected compared to the amount of waste recycled back into the stream (amounting to only about 30 %), there is still a great potential for intelligent reuse of plastic waste streams and for mechanical recycling of plastic wastes.

Taking the automobile industry as an example. In Europe the end of life (ELV) directive from the EU states, that 85%/95% of materials from vehicles should be recyclable or recoverable. The present rate of recycling of automobile components is significantly below this target. On average vehicles consist of 9 wt.-% plastics, out of this 9 wt.-% only 3 wt.-% is currently recycled. Therefore, there is still a need to be met if targets for recycling plastics in the automobile industry are to be achieved. This invention particularly focuses on mechanically recycled waste streams as opposed to "energetic recycling" where polyolefins are burnt and used for energy. However, due to cost reasons, poor mechanical properties and inferior processing properties waste streams containing cross-linked polyolefins are often used for energy recovery (e.g. incineration in a district heating plant or for heat generation in the cement industry) and are less often recycled into new products.

One major trend in the field of polyolefins is the use of recycled materials that are derived from a wide variety of sources. Durable goods streams such as those derived from waste electrical equipment (WEE) or end-of-life vehicles (ELV) contain a wide variety of plastics.

These materials can be processed to recover acrylonitrile-butadiene-styrene (ABS), high impact polystyrene (HIPS), polypropylene (PP) and polyethylene (PE) plastics. Separation can be carried out using density separation in water and then further separation based on fluorescence, near infrared absorption or raman fluorescence. However, it is commonly quite difficult to obtain either pure recycled polypropylene or pure recycled polyethylene. Generally, recycled quantities of polypropylene on the market are mixtures of both polypropylene (PP) and polyethylene (PE); this is especially true for post-consumer waste streams. Commercial recyclates from post-consumer waste sources have been found generally to contain mixtures of PP and PE, the minor component reaching up to < 50 wt.-%.

The better the quality, i.e. the higher the purity, of the recycled polyolefin the more expensive the material is. Moreover, recycled polyolefin materials are often cross-contaminated with non-polyolefin materials, such as polyethylene terephthalate, polyamide, polystyrene or non-polymeric substances like wood, paper, glass or aluminium. In addition, recycled polypropylene rich materials normally have properties, which are much worse than those of the virgin materials, unless the amount of recycled polyolefin added to the final compound is extremely low. For example, such materials often have poor performance in odour and taste, limited stiffness, limited impact strength and poor mechanical properties (such as e.g. brittleness) thus, they do not fulfil customer requirements.

The poor mechanical properties can be improved through blending the recycled polyolefin with virgin polymers, or through the use of reinforcing fillers, however this does not address the issue of odour/taste.

The established method for removing volatile organic compounds from both virgin polymers and from recycled polymers involves aeration of the polymers. This may be achieved, inter alia, through the use of air, inert gases or steam.

Variants on this process have been known for many years, and are described, inter alia, in EP 0 004 601 A1, EP 0 859 809 A1, EP 0 964 877 A1, EP 1 542 777 A2, EP 3 647 328 A1, EP 2 072 203 A1, US 2015/353703 A1, EP 3 210 733 A1, and WO 2017/036977 A1.

Whilst these methods can be very efficient at removing a broad range of volatile compounds, they can be energy intensive, which can be counterproductive when aiming for a recycling process that is as environmentally friendly as possible.

As such, there remains a need for further methods of reducing odorous, volatile compounds from recycled polyolefin compositions.

The present invention is based upon the finding that treatment of recycled polyolefin with an emulsion (E) comprising an aqueous phase having a pH in the range from 7.0 to 14.0 and an organic phase comprising at least 90% v/v of one or more fully saturated organic solvents having logP values in the range from 1.0 to 10.0, is effective for the removal of both hydrophilic volatile organic compounds and hydrophobic volatile organic compounds.

**Summary of the Invention**

The present invention is directed to a process for treating a recycled polyolefin, comprising, in the given order, the steps of:

a) providing a recycled polyolefin containing volatile organic compounds;
b) contacting the recycled polyolefin with an emulsion (E) comprising:

i) an aqueous phase having a pH in the range from 7.0 to 14.0; and
ii) an organic phase comprising at least 90% v/v of one or more fully saturated organic solvents having logP values in the range from 1.0 to 10.0;

c) removing the aqueous phase and the organic phase from the recycled polyolefin; and
d) optionally, recycling one, or both, of the aqueous phase and the organic phase.

In another aspect, the invention is directed to a use of the process of the invention for the at least partial removal of volatile organic compounds from a recycled polyolefin.
In another aspect, the invention is directed to the use of an emulsion (E) comprising:

i) an aqueous phase having a pH in the range from 7.0 to 14.0; and
ii) an organic phase comprising at least 90% v/v of one or more fully saturated organic solvents having logP values in the range from 1.0 to 10.0;

for the at least partial removal of volatile organic compounds from recycled polyolefins.
According to the present invention, the term "volatile organic compound" refers to any organic compound having an initial boiling point of less than or equal to 250 °C.

**Definitions**

In the context of the present invention, the term "volatile organic compound" refers to any organic compound having an initial boiling point of less than or equal to 250 °C, which is the definition set out by the European Union in the VOC Solvents Emissions Directive 1999/13/EC.
The term "hydrophilic", in the present invention is taken to mean having a partition function between octanol and water (logP (octanol/water)) of less than or equal to 2.0.
The term "hydrophobic", in the present invention is taken to mean having a partition function between octanol and water (logP (octanol/water)) of greater than 2.0.
The term logP refers to the partition function between two solvents, which, unless specified otherwise, are taken to be octanol and water. The logP of a given compound is calculated according to the following formula:

$$logP_{(octanol/water)} = log\left(\frac{[compound]^{octanol}}{[compound]^{water}}\right)$$

wherein the values [compound]^{octanol} and [compound]^{water} denote the concentration of the given compound in the octanol or water phase, respectively, of a biphasic octanol/water system. Whilst the person skilled in the art would know how to measure this property according to well-known methods, the values of many compounds have been tabulated, and can be found i.a. in "James Sangster, Octanol-Water Partition Coefficients of simple organic compounds. J. Phys. Chem. Ref. Data, 1989, Vol. 18, No 3, 1111-1226", meaning that the person skilled in the art would often not have to determine the logP experimentally.
The term "fully saturated" means that the compound (typically organic compound) does not have any double or triple bonds, i.e. all bonds present in the molecule are single (sigma) bonds. Fully saturated compounds may be linear, branched or cyclic. Fully saturated compounds are typically less reactive than unsaturated compounds, due to the presence of fewer reactive functional groups in the compound.
The person skilled in the art would be aware that pH values of greater than 14.0 and lower than 0.0 are theoretically possible; however, they would also be aware that the determination of such pH values is incredibly difficult using conventional pH probes. As such, in the context of this invention, aqueous solutions having an effective pH of greater than 14.0 are considered to have a pH of 14.0 and aqueous solutions having an effective pH of lower than 0.0 are considered to have a pH of 0.0.

In the context of the present invention, the term "rinse" is used to indicate the addition of a solvent, typically water, which is used to remove foreign material or remaining liquid from the surface of the polyolefin. This can be achieved in very short times, i.e. less than 5 minutes, often less than 1 minute, in contrast to "washing" steps that typically require a longer time, and agitation, to extract volatile organic compounds from the polyolefin.

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of elements, this is also to be understood to disclose a group, which preferably consists only of these elements.

The unit % v/v refers to the volume concentration of a particular solvent in a mixture, i.e. the volume of one component of the mixture divided by the volume of the entire mixture.

Where an indefinite or definite article is used when referring to a singular noun, e.g. "a", "an" or "the", this includes a plural of that noun unless something else is specifically stated.

## Detailed Description of the Invention

### Process

The process for treating a recycled polyolefin according to the present invention, comprises, in the given order, the steps of:

a) providing a recycled polyolefin containing volatile organic compounds;
b) contacting the recycled polyolefin with an emulsion (E) comprising:

i) an aqueous phase having a pH in the range from 7.0 to 14.0; and
ii) an organic phase comprising at least 90% v/v of one or more fully saturated organic solvents having logP values in the range from 1.0 to 10.0;

c) removing the aqueous phase and the organic phase from the recycled polyolefin; and
d) optionally, recycling one, or both, of the aqueous phase and the organic phase.

Step (d) is an optional step, meaning that the process according to the present invention may comprise, in the given order, the steps of:

a) providing a recycled polyolefin containing volatile organic compounds;
b) contacting the recycled polyolefin with an emulsion (E) comprising:

i) an aqueous phase having a pH in the range from 7.0 to 14.0; and
ii) an organic phase comprising at least 90% v/v of one or more fully saturated organic solvents having logP values in the range from 1.0 to 10.0; and

c) removing the aqueous phase and the organic phase from the recycled polyolefin.

Alternatively, the process according to the present invention may comprise, in the given order, the steps of:

a) providing a recycled polyolefin containing volatile organic compounds;
b) contacting the recycled polyolefin with an emulsion (E) comprising:

i) an aqueous phase having a pH in the range from 7.0 to 14.0; and
ii) an organic phase comprising at least 90% v/v of one or more fully saturated organic solvents having logP values in the range from 1.0 to 10.0;

c) removing the aqueous phase and the organic phase from the recycled polyolefin; and
d) recycling one, or both, of the aqueous phase and the organic phase.

The recycled polyolefin preferably contains hydrophilic volatile organic compounds and hydrophobic volatile organic compounds. These compounds typically result from contamination during the first use of the polymer, often when the polymer is used as packaging material, especially for food and/or personal care compositions.

It is preferred that the recycled polyolefin contains at least one of, preferably all of, the group of hydrophilic volatile compounds consisting of 2,3 butanediol, 2-pentanone and benzaldehyde.

It is further preferred that the recycled polyolefin contains at least one of, preferably all of, the group of hydrophobic volatile compounds consisting of styrene, 2-ethyl-1-hexanol, 2-nonanone, D-limonene, 5-(2-methylpropyl)-nonane and 2,6-dimethyldecane.

It is particularly preferred that the recycled polyolefin contains at least one of, preferably all of, the group of hydrophilic volatile compounds consisting of 2,3 butanediol, 2-pentanone and benzaldehyde and at least one of, preferably all of, the group of hydrophobic volatile compounds consisting of styrene, 2-ethyl-1-hexanol, 2-nonanone, D-limonene, 5-(2-methylpropyl)-nonane and 2,6-dimethyldecane.

The recycled polyolefin preferably originates from post-consumer waste, post-industrial waste or a combination thereof, most preferably from post-consumer waste.

Post-consumer waste refers to objects having completed at least a first use cycle (or life cycle), i.e. having already served their first purpose; while industrial waste refers to manufacturing scrap, which does not normally reach a consumer.

The recycled polyolefin is preferably provided in a flaked form or pelletized form.

Whilst the process according to the present invention is effective at removing hydrophobic volatile organic compounds and hydrophilic volatile organic compounds from recycled polyolefin in flaked or pelletized form, it is preferred that the recycled polyolefin is shredded prior to the treatment with the emulsion (E) in step (b). This has been found to improve the extraction of the hydrophobic volatile organic compounds and hydrophilic volatile organic compounds both as a result of higher effective surface areas and also improved ease of agitation, should agitation be required.

It is further preferred that the combination of emulsion (E) and the recycled polyolefin in step (b) is subjected to agitation through mechanical mixing, ultrasonic treatment, mechanical grinding or pump around loop. This agitation helps to expose the surface of the recycled polyolefin to emulsion (E), avoiding that a high concentration of extracted volatile organic compounds at the interface would hinder further extraction.

As would be understood by the person skilled in the art, all polyolefins typically contain fractions that are soluble in organic solvents, with many polyolefins characterized by their hexane soluble content or xylene soluble content. Although a small amount of polyolefin dissolution may be tolerated, it is better not too dissolve too much of the recycled polyolefin. As such, the person skilled in the art would understand that they would need to avoid using excessive amounts of organic solvent in step b). Minimizing the amount of organic solvent employed would also be advantageous from an economic perspective.

Preferably, the recycled polyolefin and the emulsion (E) are present in step b) in a weight ratio in the range from 5:95 to 67:33, most preferably in the range from 5:95 to 45:55.

Step (c) involves the removal of emulsion (E) from the recycled polyolefin. This may be achieved either through a stepwise process, wherein the aqueous phase is first removed, followed by the removal of the organic phase, or wherein the organic phase is first removed, followed by the removal of the aqueous phase, or alternatively through a single step wherein both phases are removed together. Whilst this process is relatively simple to achieve through decanting and/or filtering the mixture, traces of the emulsion (E) and/or either of the aqueous or organic phase can remain on the surface of the recycled polyolefin. These traces of emulsion (E) and/or either of the aqueous or organic phase may contain solubilised volatile organic compounds, and it is therefore advantageous to remove all traces of the emulsion (E).

This may be achieved through the use of rinsing steps, whereby any foreign material and/or aqueous solutions are rinsed from the surface of the recycled polyolefin.

As such, it is preferred that the process comprises an additional step (c2) of rinsing residue of the emulsion (E) and/or any other foreign material and/or degradation products thereof from the recycled polyolefin, which is carried out after step (c).

In addition to, or alternatively to, the rinsing step (c2), it is preferred that the process comprises an additional step (c3) of drying the recycled polyolefin, which is carried out after step (c) or, if step (c2) is present, after step (c2). This drying step removes any residual aqueous phase, organic phase, or rinsing solution that may be present on the surface of the recycled polyolefin.

The treatment of the recycled polyolefin with the emulsion (E) obtained in step (b) is a washing step, as opposed to a rinsing step as defined herein, and consequently typically lasts 5 minutes or longer, like 5 minutes to 5 hours.

The treatment of the recycled polyolefin with the emulsion (E) obtained in step (b) preferably lasts 5 minutes to 4 hours, preferably 30 minutes to 3 hours, most preferably 1 to 2 hours.

It is further preferred that step (b) is carried out at a temperature in the range from 10 to 90 °C, more preferably in the range from 20 to 50 °C.

Step (b) is typically carried out without artificially elevating or decreasing the pressure. As such, it is preferred that step (b) is carried out at a pressure in the range from 0.5 to 2.0 atm, more preferably in the range from 0.8 to 1.5 atm, most preferably at 1.0 atm.

The process as described above and below results in the at least partial removal of volatile organic compounds from the recycled polyolefin.

It is particularly preferred that the content of at least one hydrophilic volatile organic compound in the recycled polyolefin obtained as a product of the process, as measured by HS-GC/MS, has been reduced by at least 90% relative to the content measured before the process, and wherein the content of at least one hydrophobic volatile organic compound in the recycled polyolefin obtained as a product of the process, as measured by HS-GC/MS, has been reduced by at least 90% relative to the content measured before the process

Whilst there are a large number of hydrophilic volatile organic compounds that may be present in recycled polyolefin, which often differ from batch to batch, there are a number that are particularly useful for determining the effect of the process of the present invention, due to ease of detection and ubiquity in recycled polyolefins. Consequently, it is preferred that the individual contents of hydrophilic volatile compounds are assessed through the detection of 2,3-butanediol, 2-pentanone and benzaldehyde.

Consequently it is further preferred that at least one of the individual contents, as measured by HS-GC/MS, of 2,3-butanediol, 2-pentanone and benzaldehyde in the recycled polyolefin obtained as a product of the process has been reduced by at least 90% relative to the content measured before the process.

It is even further preferred that all of the individual contents, as measured by HS-GC/MS, of 2,3-butanediol, 2-pentanone and benzaldehyde in the recycled polyolefin obtained as a product of the process have been reduced by at least 90% relative to the content measured before the process.

There are similarly a large number of hydrophobic volatile organic compounds that may be present in recycled polyolefin, which often differ from batch to batch. Analogously to the situation with hydrophilic volatile organic compounds, it is preferred that the individual contents of hydrophobic volatile compounds are assessed through the detection of styrene, 2-ethyl-1-hexanol, 2-nonanone, D-limonene, 5-(2-methylpropyl)-nonane and 2,6-dimethyldecane.

Consequently it is further preferred that at least one of the individual contents, as measured by HS-GC/MS, of styrene, 2-ethyl-1-hexanol, 2-nonanone, D-limonene, 5-(2-methylpropyl)-nonane and 2,6-dimethyldecane in the recycled polyolefin obtained as a product of the process has been reduced by at least 90% relative to the content measured before the process.

It is even further preferred that all of the individual contents, as measured by HS-GC/MS, of styrene, 2-ethyl-1-hexanol, 2-nonanone, D-limonene, 5-(2-methylpropyl)-nonane and 2,6-dimethyldecane have been reduced by at least 90% relative to the content measured before the process.

In a particularly preferred embodiment, all of the individual contents, as measured by HS-GC/MS, of 2,3-butanediol, 2-pentanone, benzaldehyde, styrene, 2-ethyl-1-hexanol, 2-nonanone, D-limonene, 5-(2-methylpropyl)-nonane and 2,6-dimethyldecane have been reduced by at least 90% relative to the content measured before the process.

**Emulsion (E)**

The emulsion (E) of the present invention comprises:

i) an aqueous phase having a pH in the range from 7.0 to 14.0; and
ii) an organic phase comprising at least 90% v/v of one or more fully saturated organic solvents having logP values in the range from 1.0 to 10.0.

The skilled person would be aware that emulsions may comprise further phases, being immiscible with the aqueous and organic phases as described above, and indeed such complex emulsions are not excluded from the present invention. These complex emulsions may have advantages in the removal of particularly specialised volatile organic compounds; however, in the context of the present invention, it is preferred that the emulsion (E) consists of the aqueous phase and organic phase as described above, since this results in an operationally simple process.

The emulsion (E) of the present invention may be preformed before contact with the recycled polyolefin in step (b) or alternatively the aqueous phase and the organic phase may be added separately to the recycled polyolefin and the emulsion (E) generated during step (b).

Dual phase emulsions comprising an aqueous and organic phase are classified as either oil-in-water or water-in-oil emulsions, depending on which component forms the dispersed phase and which forms the continuous phase, which can usually be predicted from the relative amounts (i.e. ratio) of the phases.

In the following discussion, the terms "oil" and "water" are equivalent to "organic phase" and "aqueous phase" respectively.

The relative content of the organic and aqueous phases are not particularly limited in the present invention. It is preferred that the ratio of water to oil is in the range from 1:99 to 99: 1, more preferably in the range from 5:95 to 99:5.

In one embodiment, the emulsion (E) of the present invention is an oil-in-water emulsion, wherein the ratio of water to oil is in the range from 50:50 to 99:1, more preferably in the range from 80:20 to 95:5.

In an alternative embodiment, the emulsion (E) of the present invention is a water-in-oil emulsion, wherein the ratio of oil to water is in the range from 50:50 to 99:1, more preferably in the range from 80:20 to 95:5.

Whilst the precise ratio between the water and the oil in the emulsion (E) is not critical for achieving effective removal of volatile organic compounds, there are other advantages to certain ratios. In particular, ratios of between 80:20 and 95:5 are useful if the recycling of the major component is to be achieved. Furthermore, the organic phase, whilst relatively inexpensive, is more costly to employ than water, due to waste flow management considerations. Consequently, the embodiment wherein the ratio of water to oil is in the range from 80:20 to 95:5 is particularly preferred from an economic perspective, especially if recycling of the aqueous phase is desired. This embodiment is furthermore advantageous for avoiding excessive polyolefin dissolution in the organic phase.

The pH of the aqueous phase is in the range from 7.0 to 14.0, preferably in the range from 7.0 to 11.0, most preferably in the range from 7.0 to 9.0.

The aqueous phase can comprise various additives, such as surfactants, to improve the removal of volatile organic compounds or to improve the stability of the emulsion; however, for reasons of process economy, it is particularly preferred that the aqueous phase essentially consists of water.

The organic phase of the emulsion (E) needs to be unreactive to the extracted volatile organic compounds, the aqueous phase and the recycled polyolefin, in addition to being highly stable. Furthermore, the polarity must be such that an emulsion is formed with the aqueous phase.

Consequently, the organic phase must comprise at least 90% v/v of one or more fully saturated organic solvents having logP values in the range from 1.0 to 10.0.

It is preferred that the organic phase comprises at least 95% v/v of one or more fully saturated organic solvents having logP values in the range from 1.0 to 10.0, more preferably at least 98% v/v, most preferably the organic phase consists of one or more fully saturated organic solvents having logP values in the range from 1.0 to 10.0.

In a particularly preferred embodiment, the organic phase comprises at least 90% v/v of, more preferably 95% v/v of, yet more preferably at least 98% v/v of, most preferably consists of a single fully saturated organic solvent having a logP value in the range from 1.0 to 10.0.

The fully saturated organic solvents are preferably selected from the group of linear and branched alkanes and ethers (i.e. containing only carbon, hydrogen and optionally oxygen), more preferably from the group of linear and branched alkanes (i.e. containing only carbon and hydrogen).

The fully saturated organic solvents must have logP values in the range from 1.0 to 10.0, more preferably in the range from 2.0 to 8.0, most preferably in the range from 3.0 to 6.0.

**Use**

The present invention is also directed to a use of the process as described above, as well as the use of the emulsion (E) as described above. All preferable features and preferred embodiments apply equally to the use of the process and the use of the emulsion (E), as to the process itself.

In one embodiment, the present invention is directed to the use of the process as described above for the at least partial removal of volatile organic compounds from a recycled polyolefin.

In another embodiment, the present invention is directed to the use of an emulsion (E), comprising:

a) an aqueous phase having a pH in the range from 7.0 to 14.0; and
b) an organic phase comprising at least 90% v/v of one or more fully saturated organic solvents having log P values in the range from 1.0 to 10.0,

for the at least partial removal of volatile organic compounds from recycled polyolefins.

In both of these uses, it is preferred that the content of at least one hydrophilic volatile organic compound in the recycled polyolefin obtained as a product of the process, as measured by HS-GC/MS, has been reduced by at least 90% relative to the content measured before the process or use of the emulsion (E), and wherein the content of at least one hydrophobic volatile organic compound in the recycled polyolefin obtained as a product of the process, as measured by HS-GC/MS, has been reduced by at least 90% relative to the content measured before the process or use of the emulsion (E).

It is further preferred that at least one of the individual contents, as measured by HS-GC/MS, of 2,3-butanediol, 2-pentanone and benzaldehyde in the recycled polyolefin obtained as a product of the process has been reduced by at least 90% relative to the content measured before the process or use of the emulsion (E).

It is even further preferred that all of the individual contents, as measured by HS-GC/MS, of 2,3-butanediol, 2-pentanone and benzaldehyde in the recycled polyolefin obtained as a product of the process have been reduced by at least 90% relative to the content measured before the process or use of the emulsion (E).

It is further preferred that at least one of the individual contents, as measured by HS-GC/MS, of styrene, 2-ethyl-1-hexanol, 2-nonanone, D-limonene, 5-(2-methylpropyl)-nonane and 2,6-dimethyldecane in the recycled polyolefin obtained as a product of the process has been reduced by at least 90% relative to the content measured before the process or use of the emulsion (E).

It is even further preferred that all of the individual contents, as measured by HS-GC/MS, of styrene, 2-ethyl-1-hexanol, 2-nonanone, D-limonene, 5-(2-methylpropyl)-nonane and 2,6-dimethyldecane have been reduced by at least 90% relative to the content measured before the process or use of the emulsion (E).

In a particularly preferred embodiment, all of the individual contents, as measured by HS-GC/MS, of 2,3-butanediol, 2-pentanone, benzaldehyde, styrene, 2-ethyl-1-hexanol, 2-nonanone, D-limonene, 5-(2-methylpropyl)-nonane and 2,6-dimethyldecane have been reduced by at least 90% relative to the content measured before the process or use of the emulsion (E).

**EXAMPLES**

**1. Definitions/Determination Methods:**

**Determination of volatile organic compound content via HS-GC/MS**

**Static headspace analysis for marker substance determination**

The parameters of the applied headspace gas chromatography mass spectrometry (HS-GC/MS) method are described here.

For the measurement of a benzene standard 5 µl of a standard solution containing 100 µg/ml benzene in methanol were injected into a 20 ml HS vial and tightly closed with a PTFE cap. Each HS-GC/MS test sequence of sample measurements included the analysis of such a benzene standard. The benzene signal of the corresponding sequence was used for the calculation of the relative normalised area as described further below.

The samples were also analysed by HS-GC/MS in order to determine potential odorant and hazardous marker substances. Therefore, 2.000 $\pm$ 0.100 g samples were weighed in a 20 ml HS vial and tightly sealed with a PTFE cap. For each washing experiment a double determination of the respective sample was performed.

Applied headspace parameters for the analyses of standards and samples differed in the vial equilibration time and the HS oven temperature. Apart from that, method parameters were kept the same for standard and sample runs. The mass spectrometer was operated in scan mode and a total ion chromatogram (TIC) was recorded for each analysis. The detected substances were tentatively identified by the aid of deconvolution and a minimum match of 800 when the hit was subsequently compared to a mass spectral library. More detailed information on method parameters and data evaluation software is given below:

• HS parameter (Shimadzu AOC 5000 Headspace sampler)

| | |
|---|---|
| Vial equilibration time: | 120 min |
| Oven temperature: | 100 °C |
| Syringe temperature: | 110 °C |

• GC parameter (Shimadzu GC-MS-QP2010)

| | |
|---|---|
| Column: | DB-FATWAX UI UST 446421H (30 m x 250 µm x 0.25 µm) |
| Carrier gas: | Helium 5.0 |
| Flow: | 1.3 ml/min |
| Split: | 5:1 |
| GC oven program: | 35 °C for 2 min |
| | 10 °C/min until 250 °C |
| | 250 °C for 5 min |

• MS parameter (Agilent 5975C inert XL MSD)

| | |
|---|---|
| Acquisition mode: | Scan |

(continued)

Scan parameters:

| | | |
|---|---|---|
| Low mass: | 27 | |
| High mass: | 200 | |
| Threshold: | 10 | |

• Software/Data evaluation

MSD ChemStation E.02.02.1431
MassHunter GC/MS Acquisition B.07.05.2479
AMDIS GC/MS Analysis Version 2.71
NIST Mass Spectral Library (Version 2011)
Microsoft Excel 2016

**Data evaluation**

The benzene standard was evaluated with the same parameters as the sample runs. Therefore, extracted ion chromatograms (EICs) of the measured benzene standards and samples were created. The peak areas required for the further data evaluation were obtained by integrating the corresponding substance peak of the EIC. The applied integration parameters and substance specific ions (m/z ratios) of all marker substances are listed in tables 1 and 2.

**Table 1:** Retention times and substance specific ions of selected marker substances.

| Substance | Retention time / min | Substance specific ion of the corresponding EIC (m/z) |
|---|---|---|
| Acetaldehyde | 1.7 | 44 |
| Benzene[1] | 3.9 | 78 |
| 2-Pentanone | 4.3 | 86 |
| 2,6-Dimethyl decane | 5,1 | 170 |
| Toluene | 5.3 | 91 |
| Ethylbenzene | 6.6 | 106 |
| 1-Butanol | 7,2 | 74 |
| o-Xylene | 7.5 | 106 |
| D-Limonene | 7.6 | 136 |
| 5-(2-Methylpropyl)-nonane | 8,2 | 184 |
| Styrene | 8.6 | 104 |
| 2-Nonanone | 10.5 | 142 |
| 2-Ethyl-1-hexanol | 11.9 | 130 |
| 2,3-Butanediol | 13.1 | 90 |
| Benzaldehyde | 12.5 | 106 |
| Acetophenone | 14.2 | 105 |
| [1]Relevant for both standards and samples. | | |

In general it is not possible to exclude the possibility of overlapping peaks in some regions of the HS-GC/MS readout, however this has not been observed to have a significant influence on the values obtained in the data presented in the present application.

**Table 2:** Integration parameters for the determination of the peak areas.

| Integration event | Value |
|---|---|
| Initial area reject | 1000 |
| Initial peak width | 0.005 |
| Shoulder detection | OFF |
| Initial threshold | 10.5 |

The substance specific ion peak areas ($Area(EIC)_X$) were normalised by the extracted ion peak area of benzene ($Area(EIC)_{Benzene}$) and the sample amount in order to obtain the normalised area (norm. $Area_X$, see equation 1).

$$norm.\ Area_X = \frac{Area(EIC)_X}{Area(EIC)_{Benzene} * sample\ amount\ [g]}$$   Equation 1

For each washing experiment the normalised mean area ($\overline{norm.\ Area_X}$) of the two individual analyses (norm. $Area_{X1}$, norm. $Area_{X2}$) was calculated by using the Excel function AVERAGE (see equation 2).

$$\overline{norm.\ Area_X} = AVERAGE(norm.\ Area_{X1}: norm.\ Area_{X2})$$

Equation 2

To obtain the relative normalised area (rel. norm. $Area_X$), the normalised mean area of the respective substance ($\overline{norm.\ Area_X}$) was divided by the normalised mean area of the reference sample (norm. $Area_R$) as stated in equation 3.

$$rel.\ norm.\ Area_X = \frac{\overline{norm.\ Area_X}}{\overline{norm.\ Area_R}}$$   Equation 3

For the data evaluation three different cases must be distinguished.

1) The substance specific ion peak was evaluable in both analysis runs of the double determination. The relative normalised area was obtained by applying equations 1, 2 and 3 as described below.
2) The substance specific ion peak was evaluable in only one analysis run of the double determination. Consequently, the normalised mean area ($\overline{norm.\ Area_X}$) is equal to the normalised area (norm. $Area_X$). Thus, the so obtained relative normalised area ( rel. norm. $Area_X$) was asterisked ("*") in the result table.
3) The substance specific ion peak was not evaluable in neither of the two analysis runs of the double determination. Therefore, the calculation of the relative normalised area ( rel. norm. $Area_X$) was not applicable ("n.a.") which was indicated in the result table.

In order to estimate the deviation of the two individual analyses of one corresponding washing experiment the relative standard deviation ($RSD_X$) was calculated (only applicable to case 1). Therefore, the standard deviation of the two normalised areas (norm. $Area_{X1}$, norm. $Area_{X2}$) was determined by using the Excel function STDEV.S. To calculate $RSD_X$ the standard deviation (STDEV.S) was divided by the normalised mean area ($\overline{norm.\ Area_X}$, see equation 4).

$$RSD_X = \frac{STDEV.S(norm.\ Area_{X1}: norm.\ Area_{X2})}{\overline{norm.\ Area_X}}$$

Equation 4

To refer the standard deviation to the rel. norm. $Area_X$, the $RSD_X$ was multiplied by the rel. norm. $Area_X$ as described in equation 5.

$$rel. RSD_X = RSD_X * rel. norm. Area_X$$

Equation 5

## 2. Experimental Results:

In the following experiments, the materials used were as follows:

## Recycled polyolefin:

The recycled polyolefin employed in the following experiments was obtained from mtm plastics GmbH, Niedergebra, Germany, and is a pre-sorted, unwashed polymer mixture used by mtm plastics GmbH in the preparation of Dipolen S. Consequently the composition of the recycled polyolefin with regard to the content of polyethylene and polypropylene is identical to that of Dipolen S; however the content of small molecule contaminants is likely to be different.

Dipolen S is a recycled polymer mixture comprising polyethylene and polypropylene obtained from mtm plastics GmbH, Niedergebra, Germany and has a polyethylene content of 40 wt.-% determined by DSC analysis. The melting points determined by DSC were 162 °C (PP) and 128 °C (PE).

In the following experiments, the recycled polyolefin was obtained in a flaked form; cryo-milling was then undertaken prior to the below experiments in order to enable the experiments to be carried out on a smaller scale than would be the case for the industrial process.

The calculation of "washing efficiency" was carried out according to the following equation

$$washing\ efficiency = \frac{(compound\ conc.\ before\ wash) - compound\ conc.\ after\ wash}{(compound\ conc.\ before\ wash)}$$

wherein compound concentrations were measured using HS-GC/MS and expressed in %.

## Experimental Procedure:

Inventive Example 1:

90 ml of water and 10 ml of heptane were added to a 250 ml beaker equipped with a magnetic stir bar and the overhead ultrasound probe (UP400S from Hielscher Ultrasonics GmbH with a 40 mm diameter sonotrode; 400 W, 24 kHz) was inserted into the liquid at approximately 75% of the liquid volume height. The magnetic stirrer and the ultrasound device were switched on and after 2 minutes 10 g of the cryo-milled polymer powder were added to the emulsion, followed by stirring and sonication of the suspension for 1 hour.

The wash solvent mixture was then removed by filtration and the polymer powder was two times rinsed with water. Each of these rinsing steps was done by contacting the polymer powder for 30 seconds with 100 ml of demineralised water, followed by removal of the water by filtration. The polymer powder was then dried in a vacuum oven at 70 °C for 1 hour.

Inventive Example 2:

As example 1, except that 50 ml of water and 50 ml of heptane were used as the wash solvent mixture instead of 90 ml of water and 10 ml of heptane.

Inventive Example 3:

As example 1, except that 10 ml of water and 90 ml of heptane were used as the wash mixture instead of 90 ml of water and 10 ml of heptane.

Inventive Example 4:

As example 1, except that an Ultraturrax device (IKA T-18 Ultra Turrax Homogenizer) was used instead of the overhead ultrasound probe.

Inventive Example 5:

As example 4, except that a cooling bath was used to keep the temperature during the wash with the water-heptane emulsion at approximately 20 °C.

Comparative Example 1:

100 ml of water as the wash solvent were added to a 250 ml beaker equipped with a magnetic stir bar and an overhead ultrasound probe (UP400S from Hielscher Ultrasonics GmbH with a 40 mm diameter sonotrode; 400 W, 24 kHz) was inserted into the liquid at approximately 75% of the liquid volume height. 10 g of cryo-milled polymer powder were then added and the stirred suspension was sonicated for 1 hour. The liquid phase was then removed by filtration and the polymer powder was two times rinsed with water. Each of these rinsing steps consisted of contacting the polymer powder for 30 seconds with 100 ml of demineralised water, followed by removal of the water by filtration. The polymer powder was then dried in a vacuum oven at 70 °C for 1 hour.

Comparative Example 2:

As comparative example 1, except that 100 ml of heptane were used as the wash solvent instead of 100 ml of water.

**Table 3. Lipophilicity and volatility of tested volatile organic compounds**

| Contaminant | log $P_{octanot/water}$* | b.p. |
|---|---|---|
| 2,3-Butanediol | -0.92[1] | 177 °C |
| 2-Pentanone | 0.84[2] | 102 °C |
| 1-Butanol | 0.84[2] | 118 °C |
| Benzaldehyde | 1.48[2] | 178 °C |
| Styrene | 3.05[2] | 145 °C |
| 2-Ethyl-1-hexanol | 2.73[3] | 185 °C |
| 2-Nonanone | 3.16[2] | 195 °C |
| D-Limonene | 4.57[4] | 176 °C |
| 5-(2-Methylpropyl)-nonane | 5.03[5] | 211 °C |
| 2,6-Dimethyl decane | 6.09[6] | 200 °C |

*The logP values of the tested volatile organic compounds were not determined experimentally, but are generally accepted literature values, which can be found i.a. at:

[1] National Center for Biotechnology Information (2020). PubChem Compound Summary for CID 262, 2,3-Butanediol. Retrieved November 13, 2020 from https://pubchem.ncbi.nlm.nih.gov/compound/2_3-Butanediol.

[2] James Sangster, Octanol-Water Partition Coefficients of simple organic compounds. J. Phys. Chem. Ref. Data, 1989, Vol. 18, No 3, 1111-1226

[3] National Center for Biotechnology Information (2020). PubChem Compound Summary for CID 7720, 2-Ethylhexanol. Retrieved November 13, 2020 from https://pubchem.ncbi.nlm.nih.gov/ compound/2- Ethylhexanol

[4] National Center for Biotechnology Information (2020). PubChem Compound Summary for CID 22311, Limonene. Retrieved November 13, 2020 from https://pubchem.ncbi.nlm.nih.gov/compound/Limonene

[5] https://www.chemsrc.com/en/cas/62185-53-9_216142.htm1

[6] https://www.chemsrc.com/en/cas/13150-81-7_122290.html

**Table 4. Washing efficiency of water, heptane, and various emulsion washes in terms of the reduction of contaminants (based on contaminants content before the treatment).**

|  | water | heptane | Water/ heptane 90:10 | Water/ heptane 50:50 | Water/ heptane 10:90 | Water/ heptane 90:10 (UT)* | Water/ heptane 90: 10 (UT/ice)** |
|---|---|---|---|---|---|---|---|
| 2,3-Butanediol | 100 | 98 | 100 | 100 | 100 | 100 | 100 |
| 2-Pentanone | 78 | 92 | 96 | 99 | 99 | 99 | 98 |
| Benzaldehyde | 100 | 97 | 100 | 100 | 100 | 100 | 97 |
| Styrene | 48 | 96 | 98 | 99 | 98 | 98 | 98 |
| 2-Ethyl-1-hexanol | 49 | 92 | 95 | 98 | 99 | 96 | 94 |
| 2-Nonanone | 62 | 100 | 100 | 100 | 100 | 100 | 100 |
| D-Limonene | 42 | 100 | 100 | 99 | 100 | 99 | 97 |
| 5-(2-Methylpropyl)-nonane | 8 | 89 | 95 | 98 | 98 | 96 | 100 |
| 2,6-Dimethyl decane | 30 | 100 | 96 | 100 | 99 | 98 | 98 |
| Hydrophilic average | 93 | 96 | 99 | 100 | 100 | 100 | 98 |
| Hydrophobic average | 40 | 96 | 97 | 99 | 99 | 98 | 98 |

*wash undertaken in Ultraturrax machine at 65 °C **wash undertaken in Ultraturrax machine cooled with ice, at approx. 20 °C

As can be seen from Table 4, the washing efficiency of emulsions, be they water-in-oil or oil-in-water emulsions, are superior to the use of either water or heptane individually. The aqueous washes (i.e. with water alone) typically have lower efficiency for the removal of hydrophilic volatile organic compounds and the heptane washes typically are not fully effective at the removal of hydrophilic volatile organic compounds.

Of particular importance is the effectiveness of the water/heptane 90: 10 emulsion, which allows for the use of low amounts of heptane and the easy recycling of the aqueous phase, both of which add to the economic benefits of the process.

A further minor improvement can be observed when Ultraturrax has been used, reflecting the importance of emulsion formation and sheer forces. The ice-cooled Ultraturrax results show that it is these features, rather than the temperature that is the source of the improvements.

## Claims

1.  A process for treating a recycled polyolefin, comprising, in the given order, the steps of:

    a) providing a recycled polyolefin containing volatile organic compounds;
    b) contacting the recycled polyolefin with an emulsion (E) comprising:

        i) an aqueous phase having a pH in the range from 7.0 to 14.0; and
        ii) an organic phase comprising at least 90% v/v of one or more fully saturated organic solvents having logP values in the range from 1.0 to 10.0;

    c) removing the aqueous phase and the organic phase from the recycled polyolefin; and
    d) optionally recycling one, or both, of the aqueous phase and the organic phase,

    wherein the term "volatile organic compound" refers to any organic compound having an initial boiling point of less than or equal to 250 °C.

2. The process according to claim 1 wherein the recycled polyolefin of step (a) is in flaked form or pelletized form, preferably wherein the recycled polyolefin in flaked form or pelletized form is shredded prior to step (b).

3. The process according to claim 1 or claim 2, wherein step (b) is carried out at a temperature in the range from 10 to 90 °C.

4. The process according to any one of the preceding claims, wherein step (b) is carried out for a time period in the range from 5 minutes to 5 hours.

5. The process according to any one of the preceding claims, wherein the emulsion (E) is an oil-in-water emulsion, wherein the ratio of water to oil is in the range from 50:50 to 99:1, more preferably in the range from 80:20 to 95:5.

6. The process according to any one of claims 1 to 4, wherein the emulsion (E) is a water-in-oil emulsion, wherein the ratio of oil to water is in the range from 50:50 to 99:1, more preferably in the range from 80:20 to 95:5.

7. The process according to any one of the preceding claims, wherein the one or more fully saturated organic solvents are selected from the group of linear and branched alkanes and ethers, more preferably the group of linear and branched alkanes.

8. The process according to any one of the preceding claims, wherein the combination of recycled polyolefin and emulsion (E) obtained in step (b) is subjected to agitation through mechanical mixing, ultrasonic treatment, mechanical grinding or pump around loop.

9. The process according to any one of the preceding claims, wherein the process comprises an additional step (c2) of rinsing residue of the emulsion (E) and/or any other foreign material and/or degradation products thereof from the recycled polyolefin, which is carried out after step (c); and/or
wherein the process comprises an additional step (c3) of drying the recycled polyolefin, which is carried out after step (c) or step (c2), if present.

10. The process according to any one of the preceding claims, wherein the aqueous phase removed in step (c) is recycled.

11. The process according to any one of the preceding claims, wherein the recycled polyolefin originates from post-consumer waste, post industrial waste, or a combination thereof, preferably from post-consumer waste.

12. The process according to any of the preceding claims, wherein the content of at least one hydrophilic volatile organic compound in the recycled polyolefin obtained as a product of the process, as measured by HS-GC/MS, has been reduced by at least 90% relative to the content measured before the process, preferably wherein at least one of, most preferably all of, the individual contents of 2,3 butanediol, 2-pentanone and benzaldehyde has been reduced by at least 90% relative to the content measured before the process, and
wherein the content of at least one hydrophobic volatile organic compound in the recycled polyolefin obtained as a product of the process, as measured by HS-GC/MS, has been reduced by at least 90% relative to the content measured before the process, preferably wherein at least one of, most preferably all of, the individual contents of styrene, 2-ethyl-1-hexanol, 2-nonanone, D-limonene, 5-(2-methylpropyl)-nonane and 2,6-dimethyldecane has been reduced by at least 90% relative to the content measured before the process.

13. Use of the process according to any one of claims 1 to 11, for the at least partial removal of volatile organic compounds from a recycled polyolefin,
wherein the term "volatile organic compound" refers to any organic compound having an initial boiling point of less than or equal to 250 °C.

14. Use of an emulsion (E) comprising:

a) an aqueous phase having a pH in the range from 7.0 to 14.0; and
b) an organic phase comprising at least 90% v/v of one or more fully saturated organic solvents having log P values in the range from 1.0 to 10.0,
for the at least partial removal of volatile organic compounds from recycled polyolefins,
wherein the term "volatile organic compound" refers to any organic compound having an initial boiling point of less than or equal to 250 °C.

**Patentansprüche**

1. Verfahren zur Behandlung eines recycelten Polyolefins, das in der angegebenen Reihenfolge die folgenden Schritte umfasst:

   a) Bereitstellung eines recycelten Polyolefins, das flüchtige organische Verbindungen enthält;
   b) Inkontaktbringen des recycelten Polyolefins mit einer Emulsion (E), die Folgendes umfasst:

   i) eine wässrige Phase mit einem pH-Wert im Bereich von 7,0 bis 14,0; und
   ii) eine organische Phase, die zu mindestens 90 % V/V aus einem oder mehreren vollständig gesättigten organischen Lösungsmitteln mit logP-Werten im Bereich von 1,0 bis 10,0 besteht;

   c) Entfernen der wässrigen Phase und der organischen Phase aus dem recycelten Polyolefin; und
   d) gegebenenfalls Recycling der wässrigen Phase oder der organischen Phase oder beider, wobei sich der Begriff "flüchtige organische Verbindung" auf jede organische Verbindung mit einem Anfangssiedepunkt von höchstens 250 °C bezieht.

2. Verfahren gemäß Anspruch 1, bei dem das recycelte Polyolefin aus Schritt (a) in flockenförmiger oder pelletierter Form vorliegt, wobei das recycelt Polyolefin in flockenförmiger oder pelletierter Form vorzugsweise vor Schritt (b) zerkleinert wird.

3. Verfahren gemäß Anspruch 1 oder Anspruch 2, wobei Schritt (b) bei einer Temperatur im Bereich von 10 bis 90 °C durchgeführt wird.

4. Verfahren gemäß einem der vorhergehenden Ansprüche, wobei Schritt (b) über einen Zeitraum im Bereich von 5 Minuten bis 5 Stunden durchgeführt wird.

5. Verfahren gemäß einem der vorhergehenden Ansprüche, wobei die Emulsion (E) eine Öl-in-Wasser-Emulsion ist, wobei das Verhältnis von Wasser zu Öl im Bereich von 50:50 bis 99:1, vorzugsweise im Bereich von 80:20 bis 95:5 liegt.

6. Verfahren gemäß einem der Ansprüche 1 bis 4, wobei die Emulsion (E) eine Wasser-in-Öl-Emulsion ist, bei der das Verhältnis von Öl zu Wasser im Bereich von 50:50 bis 99:1, vorzugsweise im Bereich von 80:20 bis 95:5 liegt.

7. Verfahren gemäß einem der vorhergehenden Ansprüche, wobei das oder die mehreren vollständig gesättigten organischen Lösungsmittel aus der Gruppe der linearen und verzweigten Alkane und Ether, vorzugsweise aus der Gruppe der linearen und verzweigten Alkane, ausgewählt werden.

8. Verfahren gemäß einem der vorhergehenden Ansprüche, wobei die in Schritt (b) erhaltene Kombination aus recyceltem Polyolefin und Emulsion (E) durch mechanisches Mischen, Ultraschallbehandlung, mechanisches Mahlen oder Umpumpen gerührt wird.

9. Verfahren gemäß einem der vorhergehenden Ansprüche, wobei das Verfahren einen zusätzlichen Schritt (c2) des Ausspülens von Rückständen der Emulsion (E) und/oder jeglichem anderen Fremdmaterial und/oder deren Abbauprodukten aus dem recycelten Polyolefin umfasst, der nach Schritt (c) durchgeführt wird; und/oder wobei das Verfahren einen zusätzlichen Schritt (c3) des Trocknens des recycelten Polyolefins umfasst, der nach Schritt (c) oder Schritt (c2), falls vorhanden, durchgeführt wird.

10. Verfahren gemäß einem der vorhergehenden Ansprüche, wobei die in Schritt (c) entfernte wässrige Phase zurückgeführt wird.

11. Verfahren gemäß einem der vorhergehenden Ansprüche, wobei das recycelte Polyolefin aus Post-Verbraucher-Abfall, Post-Industrie-Abfall oder einer Kombination davon stammt, vorzugsweise aus Post-Verbraucher-Abfall.

12. Verfahren gemäß einem der vorhergehenden Ansprüche, wobei der Gehalt an mindestens einer hydrophilen flüchtigen organischen Verbindung in dem als Produkt des Verfahrens erhaltenen recyceltem Polyolefin, gemessen durch HS-GC/MS, um mindestens 90 % relativ zu dem vor dem Verfahren gemessenen Gehalt reduziert wurde, vorzugsweise wobei mindestens einer, am meisten bevorzugt alle, der individuellen Gehalte an 2,3-Butandiol, 2-Pentanon und Benzaldehyd um mindestens 90 % relativ zu dem vor dem Verfahren gemessenen Gehalt reduziert wurde, und

wobei der durch HS-GC/MS gemessene Gehalt an mindestens einer hydrophoben flüchtigen organischen Verbindung in dem als Produkt des Verfahrens erhaltenen recycelten Polyolefin um mindestens 90 % im Vergleich zu dem vor dem Verfahren gemessenen Gehalt verringert wurde, wobei vorzugsweise mindestens einer, am meisten bevorzugt alle, der individuellen Gehalte an Styrol, 2-Ethyl-1-hexanol, 2-Nonanon, D-Limonen, 5-(2-Methylpropyl)-nonan und 2,6-Dimethyldecan h um mindestens 90 % relativ zu dem vor dem Verfahren gemessenen Gehalt reduziert wurde.

13. Verwendung des Verfahrens nach einem der Ansprüche 1 bis 11 zur zumindest teilweisen Entfernung flüchtiger organischer Verbindungen aus einem recycelten Polyolefin, wobei sich der Begriff "flüchtige organische Verbindung" auf jede organische Verbindung mit einem Anfangssiedepunkt von weniger als oder gleich 250 °C bezieht.

14. Verwendung einer Emulsion (E), umfassend:

a) eine wässrige Phase mit einem pH-Wert im Bereich von 7,0 bis 14,0; und
b) eine organische Phase, die zu mindestens 90 % v/v aus einem oder mehreren vollständig gesättigten organischen Lösungsmitteln mit log P-Werten im Bereich von 1,0 bis 10,0 besteht,
zur zumindest teilweisen Entfernung von flüchtigen organischen Verbindungen aus recycelten Polyolefinen, wobei sich der Begriff "flüchtige organische Verbindung" auf jede organische Verbindung mit einem Anfangssiedepunkt von höchstens 250 °C bezieht.

**Revendications**

1. Procédé de traitement d'une polyoléfine recyclée comprenant, dans l'ordre indiqué, les étapes suivantes :

a) la fourniture d'une polyoléfine recyclée contenant des composés organiques volatils ;
b) la mise en contact de la polyoléfine recyclée avec une émulsion (E) comprenant :

i) une phase aqueuse présentant un pH dans la plage de 7,0 à 14,0 ; et
ii) une phase organique comprenant au moins 90 % v/v d'un ou de plusieurs solvants organiques totalement saturés présentant des valeurs de logP dans la plage de 1,0 à 10,0 ;

c) l'élimination de la phase aqueuse et de la phase organique de la polyoléfine recyclée ; et
d) facultativement le recyclage d'une ou des deux parmi la phase aqueuse et la phase organique,

dans lequel l'expression « composé organique volatil » désigne tout composé organique présentant un point d'ébullition initial inférieur ou égal à 250 °C.

2. Procédé selon la revendication 1, dans lequel la polyoléfine recyclée de l'étape (a) est sous forme de lamelles ou de granulés, de préférence dans lequel la polyoléfine recyclée sous forme de lamelles ou de granulés est déchiquetée avant l'étape (b).

3. Procédé selon la revendication 1 ou la revendication 2, dans lequel l'étape (b) est réalisée à une température dans la plage de 10 à 90 °C.

4. Procédé selon l'une des revendications précédentes, dans lequel l'étape (b) est réalisée pendant une période de temps dans la plage de 5 minutes à 5 heures.

5. Procédé selon l'une des revendications précédentes, dans lequel l'émulsion (E) est une émulsion huile-dans-eau, dans lequel le rapport eau/huile est dans la plage de 50:50 à 99:1, de préférence dans la plage de 80:20 à 95:5.

6. Procédé selon l'une des revendications 1 à 4, dans lequel l'émulsion (E) est une émulsion eau-dans-huile, dans lequel le rapport huile/eau est dans la plage de 50:50 à 99:1, de préférence dans la plage de 80:20 à 95:5.

**7.** Procédé selon l'une des revendications précédentes, dans lequel les un ou plusieurs solvants organiques totalement saturés sont sélectionnés dans le groupe des alcanes et éthers linéaires et ramifiés, de préférence dans le groupe des alcanes linéaires et ramifiés.

**8.** Procédé selon l'une des revendications précédentes, dans lequel la combinaison de polyoléfine recyclée et d'émulsion (E) obtenue dans l'étape (b) est soumise à une agitation par mélange mécanique, traitement par ultrasons, broyage mécanique ou pompage en boucle.

**9.** Procédé selon l'une des revendications précédentes, dans lequel le procédé comprend une étape (c2) supplémentaire de rinçage d'un résidu de l'émulsion (E) et/ou de tout autre matériau étranger et/ou de produits de dégradation de celle-ci à partir de la polyoléfine recyclée, qui est réalisée après l'étape (c) ; et/ou dans lequel le procédé comprend une étape (c3) supplémentaire de séchage de la polyoléfine recyclée, qui est réalisée après l'étape (c) ou l'étape (c2), si elle est présente.

**10.** Procédé selon l'une des revendications précédentes, dans lequel la phase aqueuse éliminée dans l'étape (c) est recyclée.

**11.** Procédé selon l'une des revendications précédentes, dans lequel la polyoléfine recyclée provient de déchets post-consommation, de déchets post-industriels, ou d'une combinaison de ceux-ci, de préférence de déchets post-consommation.

**12.** Procédé selon l'une des revendications précédentes, dans lequel la teneur en au moins un composé organique volatil hydrophile dans la polyoléfine recyclée obtenue en tant que produit du procédé, telle que mesurée par HS-GC/MS, a été réduite d'au moins 90 % par rapport à la teneur mesurée avant le procédé, de préférence dans lequel au moins une des teneurs individuelles, de manière préférée entre toutes, toutes les teneurs individuelles en 2,3-butanediol, 2-pentanone et benzaldéhyde ont été réduites d'au moins 90 % par rapport à la teneur mesurée avant le procédé, et
dans lequel la teneur en au moins un composé organique volatil hydrophobe dans la polyoléfine recyclée obtenue en tant que produit du procédé, telle que mesurée par HS-GC/MS, a été réduite d'au moins 90 % par rapport à la teneur mesurée avant le procédé, de préférence dans lequel au moins une des teneurs individuelles, de manière préférée entre toutes, toutes les teneurs individuelles en styrène, 2-éthyl-1-hexanol, 2-nonanone, D-limonène, 5-(2-méthylpropyl)-nonane et 2,6-diméthyldécane ont été réduites d'au moins 90 % par rapport à la teneur mesurée avant le procédé.

**13.** Utilisation du procédé selon l'une des revendications 1 à 11, pour l'élimination au moins partielle des composés organiques volatils d'une polyoléfine recyclée, dans laquelle l'expression « composé organique volatil » désigne tout composé organique présentant un point d'ébullition initial inférieur ou égal à 250 °C.

**14.** Utilisation d'une émulsion (E) comprenant :

a) une phase aqueuse présentant un pH dans la plage de 7,0 à 14,0 ; et
b) une phase organique comprenant au moins 90 % v/v d'un ou de plusieurs solvants organiques totalement saturés présentant des valeurs de log P dans la plage de 1,0 à 10,0,
pour l'élimination au moins partielle de composés organiques volatils de polyoléfines recyclées,
dans laquelle l'expression « composé organique volatil » désigne tout composé organique présentant un point d'ébullition initial inférieur ou égal à 250 °C.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0004601 A1
- EP 0859809 A1
- EP 0964877 A1
- EP 1542777 A2
- EP 3647328 A1
- EP 2072203 A1
- US 2015353703 A1
- EP 3210733 A1
- WO 2017036977 A1

**Non-patent literature cited in the description**

- **JAMES SANGSTER.** Octanol-Water Partition Coefficients of simple organic compounds. *J. Phys. Chem. Ref. Data,* 1989, vol. 18 (3), 1111-1226
- *PubChem Compound Summary for CID 262, 2,3-Butanediol,* 13 November 2020, https://pubchem.ncbi.nlm.nih.gov/compound/2_3-Butanediol
- *PubChem Compound Summary for CID 7720, 2-Ethylhexanol,* 2020, https://pubchem.ncbi.nlm.nih.gov/ compound/2- Ethylhexanol
- *PubChem Compound Summary for CID 22311, Limonene. Retrieved,* 2020, https://pubchem.ncbi.nlm.nih.gov/compound/Limonene